# FASCICULE DE BREVET EUROPEEN

(11) **EP 1 704 448 B1**
(45) Date de publication et mention de la délivrance du brevet: **06.11.2019**
(21) Numéro de dépôt: 05700304.8
(22) Date de dépôt: 11.01.2005
(51) Int. Cl.: G04B 13/02, G04B 35/00, F16H 55/16

(54) **MOBILE DENTE A RATTRAPAGE DE JEU, ENGRENAGE ET UTILISATION DE CET ENGRENAGE**
GEZÄHNTES DREHTEIL FÜR DIE EINHOLUNG DES SPIELS, GETRIEBE, UND DIE BENUTZUNG DIESES GETRIEBES
TOOTHED WHEEL FOR THE REMOVAL OF PLAY, GEAR, AND THE USE OF THIS GEAR

(30) Priorité: 13.01.2004 EP 04405026
(43) Date de publication de la demande: 27.09.2006
(73) Titulaire: ROLEX SA, 1211 Genève 24 (CH)
(72) Inventeur: DAOUT, Jérôme, 1180 Rolle (CH)
(74) Mandataire: Moinas & Savoye SARL
(86) Numéro de dépôt international: PCT/CH2005/000009
(87) Numéro de publication internationale: WO 2005/069086

(56) Documents cités:
- EP-A- 1 380 772
- JP-A- 52 133 466
- JP-A- S52 133 466
- JP-A- S63 130 961
- US-A- 4 127 041
- US-A- 4 127 041
- PATENT ABSTRACTS OF JAPAN vol. 0123, no. 78 (M-751), 11 octobre 1988 (1988-10-11) & JP 63 130961 A (KIYOUIKU HAGURUMA KOGYO KK; others: 01), 3 juin 1988 (1988-06-03)

## Description

La présente invention se rapporte à un mobile denté à rattrapage de jeu pour engrenage de précision, notamment d'horlogerie, dans lequel les dents comportent au moins une portion s'étendant symétriquement de part et d'autre du rayon dudit mobile passant par le sommet de ladite dent et qui est reliée de manière élastique audit mobile pour lui conférer une liberté de mouvement dans le plan de ce mobile. Cette invention se rapporte également à un engrenage, ainsi qu'à une utilisation de cet engrenage.

Tout engrenage a normalement un jeu pour lui permettre de tourner, étant donné qu'il n'est pas possible de trouver un profil de denture qui pourrait travailler sans jeu. L'existence de ce jeu présente cependant l'inconvénient de ne pas pouvoir assurer une transmission de type desmodromique. Ceci est notamment gênant dans un rouage de mise à l'heure étant donné qu'il se produit toujours un rattrapage du jeu de l'engrenage de minuterie après la mise à l'heure, en sorte que l'aiguille des minutes n'est pas entraînée tant que le jeu n'a pas été rattrapé. Ceci rend difficile la synchronisation de l'aiguille des minutes avec celle des secondes par rapport aux divisions des heures et des minutes portées par le cadran.

Dans les mécanismes d'affichage des secondes indirect tels que les chronographes, puisque l'aiguille de chronographe ne se trouve pas dans la chaîne cinématique du rouage sous tension constante, situé entre le barillet moteur et l'échappement, il est nécessaire de prévoir un frein pour empêcher le flottement de l'aiguille des secondes du chronographe.

Ce problème du jeu se rencontre aussi dans toutes les montres électroniques à affichage analogique, dans lesquelles le rouage indicateur n'est pas sous tension.

Par ailleurs, dans les montres mécaniques, bien que le rouage de transmission de la force motrice à l'échappement soit lui constamment sous tension et que le problème du jeu d'engrenage ne se pose donc pas, le mouvement de ce rouage n'est pas continu, mais saccadé, marqué de plusieurs arrêts brusques suivis d'accélérations à chaque pas de la roue d'échappement, elle-même contrôlée par l'ancre et les oscillations du régulateur balancier-spiral. Les profils de ces accélérations seraient susceptibles d'être modifiés par la présence d'éléments élastiques entre les mobiles partenaires d'un engrenage, ceci n'étant pas lié au rattrapage de jeu dans un rouage sous tension, tel que le rouage de finissage.

On a déjà proposé, dans le JP 59-019768, une roue ou un pignon denté dont les dents présentent chacune une fente radiale pour permettre d'augmenter leur largeur de manière à supprimer le jeu d'engrenage avec le mobile denté avec lequel il engrène. La présence des fentes radiales permet, grâce à l'élasticité des deux demi-dents, de varier la largeur des dents en prise avec celles de ce mobile denté et de compenser le jeu normalement nécessaire à l'engrènement. Une telle solution est utilisable pour des dentures relativement grandes, mais pas pour des dentures aussi petites que celles des mécanismes de montres bracelets dont l'épaisseur des dents se situe aux environs de 0,2 mm, l'épaisseur de la planche de roue dans laquelle les dents sont taillées, entre 0,1 et 0,5 mm et la hauteur des dents aux environs de 0,3 mm.

Le FR 2379736 propose différentes solutions avec des dents fendues ou évidées en vue de leur permettre de se déformer pour compenser un décentrement, une erreur de pas ou un défaut analogue. La solution proposée par ce document est avant tout destinée à compenser les erreurs induites dans les roues dentées en plastique injecté, due au retrait difficilement contrôlable de la matière plastique lors du refroidissement.

JP 63 130961 et EP1380722 divulguent un mobile denté à rattrapage de jeu pour engrenage de précision.

Il existe encore plusieurs solutions, utilisées notamment dans le domaine de l'impression, dans lesquelles le jeu d'engrenage est supprimé à l'aide de deux roues dentées coaxiales identiques, reliées l'une à l'autre par un ressort qui engendre entre ces deux roues un couple supérieur au couple à transmettre, supprimant ainsi le jeu d'engrenage. Une telle solution n'est applicable dans un mécanisme d'horlogerie qu'au prix d'une augmentation de l'encombrement.

On peut donc constater qu'il n'existe à ce jour pas de solution satisfaisante au problème du rattrapage de jeu dans les engrenages de petites dimensions tels que ceux des pièces d'horlogerie, notamment des montres-bracelets.

Le but de la présente invention est d'apporter une solution adaptée au problème spécifique de ce type d'engrenage, notamment à leurs dimensions et dont les roues dentées soient susceptibles d'être fabriquées à une échelle industrielle. Un autre but de cette invention est de modifier les profils d'accélération dans un rouage d'une transmission non continue, tel qu'un rouage de finissage.

A cet effet, cette invention a pour objet un mobile denté à rattrapage de jeu pour engrenage de précision, notamment d'horlogerie, selon la revendication 1. Elle a également pour objet un engrenage pour mécanisme de précision selon la revendication 9, ainsi qu'une montre-bracelet selon la revendication 12.

Les dessins annexés illustrent, schématiquement et à titre d'exemple, différentes formes d'exécution et leurs variantes, du mobile denté à rattrapage de jeu, ainsi que de l'engrenage objets de la présente invention.
La figure 1 est une vue partielle en perspective d'une première forme d'exécution;
la figure 2 est une vue partielle en perspective d'une variante de la figure 1;
la figure 3 est une vue partielle en perspective d'une deuxième variante de la figure 1;
la figure 4 est une vue partielle en perspective d'une troisième variante de la figure 1;
la figure 5 est une vue partielle en perspective d'une quatrième variante de la figure 1;
la figure 6 est une vue partielle en perspective d'une deuxième forme d'exécution;
la figure 7 est une vue partielle en perspective d'une variante de la figure 6;
la figure 8 est une vue partielle en perspective d'une autre variante de la figure 6;
la figure 9 est une vue partielle en perspective d'une troisième variante de la figure 6;
la figure 10 est une vue partielle en perspective d'une quatrième variante de la figure 6;
la figure 11 est une vue partielle en perspective d'une troisième forme d'exécution;
la figure 12 est une vue partielle en perspective d'une variante de la figure 11;
la figure 13 est une vue partielle en perspective d'une seconde variante de la figure 11;
la figure 14 est une vue partielle en perspective d'une quatrième forme d'exécution;
la figure 15 est une vue partielle en perspective d'une variante de la figure 14;
la figure 16 est une vue partielle en perspective d'une cinquième forme d'exécution;
la figure 17 est un diagramme du couple de réaction sur l'axe du mobile denté mesuré en fonction de son angle de rotation;
la figure 18 est une vue d'une forme d'exécution de l'engrenage objet de la présente invention.

Il y a lieu de préciser en guise de préambule que la présente invention traite du problème du rattrapage de jeu dans les engrenages de précision de très petits mécanismes, en particulier des mécanismes d'horlogerie, plus particulièrement des mécanismes de montres, spécialement de montres-bracelets.

La taille des dents dans ce type de mécanisme varie dans les fourchettes suivantes: la hauteur des planches de roues dentées (ou leur épaisseur) se situe entre 0,1 et 0,5 mm. L'épaisseur e des dents mesurée sur le diamètre primitif varie typiquement entre 0,05 mm et 0,3 mm et la hauteur (c'est-à-dire leur dimension radiale) varie de 0,15 mm à 0,6 mm.

Compte tenu de ces dimensions, il est évident qu'il y a lieu d'utiliser des techniques appropriées pour fabriquer de telles dents avec une ou deux portions élastiques. Ces techniques peuvent être notamment l'électroformage, la gravure sèche par plasma utilisée en microélectronique, la gravure ou l'usinage chimique, l'électroérosion (par fil ou par électrode de forme), le découpage par laser.

Suivant les dimensions et les matériaux utilisés, on pourra avoir recours à l'injection, au frittage ou au découpage par jet d'eau.

Les matériaux peuvent être par exemple le Ni, NiP, NiCo, si l'on utilise un procédé d'électroformage, le silicium si l'on utilise la gravure sèche par plasma, le silicium ou le diamant synthétique avec l'usinage chimique, les métaux dans le cas de l'électroérosion, le plastique avec l'injection, les poudres métalliques ou céramiques pour le frittage, les métaux, le silicium ou les céramiques pour le découpage par laser et tous les matériaux pour le découpage par jet d'eau.

Ceci dit, nous allons décrire maintenant les différentes formes d'exécutions et variantes de mobiles dentés à rattrapage de jeu selon la présente invention.

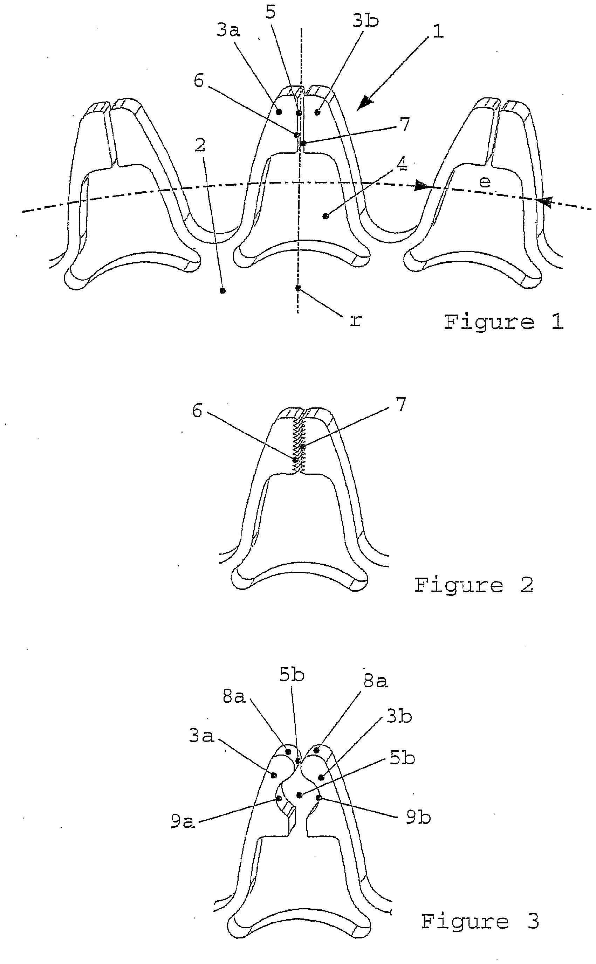

La forme d'exécution de la figure 1 montre trois dents 1 d'un mobile denté 2. Chaque dent 1 comporte deux portions élastiques de flexion 3a, 3b, symétriques par rapport à un rayon r du mobile denté 2 passant par le sommet de chaque dent. L'élasticité des portions élastiques 3a, 3b leur est conférée par une ouverture 4 en forme de cloche, centrée sur le rayon r. Les deux portions 3a, 3b se terminent par deux parties plus larges séparées par une fente radiale 5 centrée sur le rayon r. La largeur de cette fente radiale 5 correspond sensiblement au jeu d'engrenage à rattraper.

En cas de rattrapage de jeu, une des portions élastiques de flexion fléchit, jusqu'à ce que la fente 5 se referme, en sorte que les deux surfaces 6 et 7 délimitant cette fente 5 constituent des moyens de butée limitant le déplacement des portions élastiques de flexion 3a, 3b. Lorsque les deux portions 3a, 3b sont en butée, leurs moments de flexion s'additionnent et on peut les dimensionner pour que lorsqu'il s'additionnent, ils opposent une résistance supérieure au couple à transmettre entre les deux mobiles.

La figure 2 montre une variante de la figure 1 dans laquelle les deux surfaces 6, 7 de part et d'autre de la fente radiale 5 ne sont pas lisses, mais sont conformées pour les empêcher de glisser l'une par rapport à l'autre lorsqu'elles sont en butée, ce qui améliore la rigidité de la dent une fois que le jeu d'engrenage a été rattrapé.

La figure 3 montre une autre variante de la figure 1 dans laquelle la fente 5 est remplacée par deux fentes 5a, 5b de largeurs respectives différentes. La fente 5a plus étroite est ménagée entre deux surfaces semi-cylindriques 8a, 8b qui butent l'une contre l'autre avant les deux autres surfaces 9a, 9b qui délimitent la fente 5b, faisant ainsi fléchir les portions 3a, 3b dans leur partie médiane.

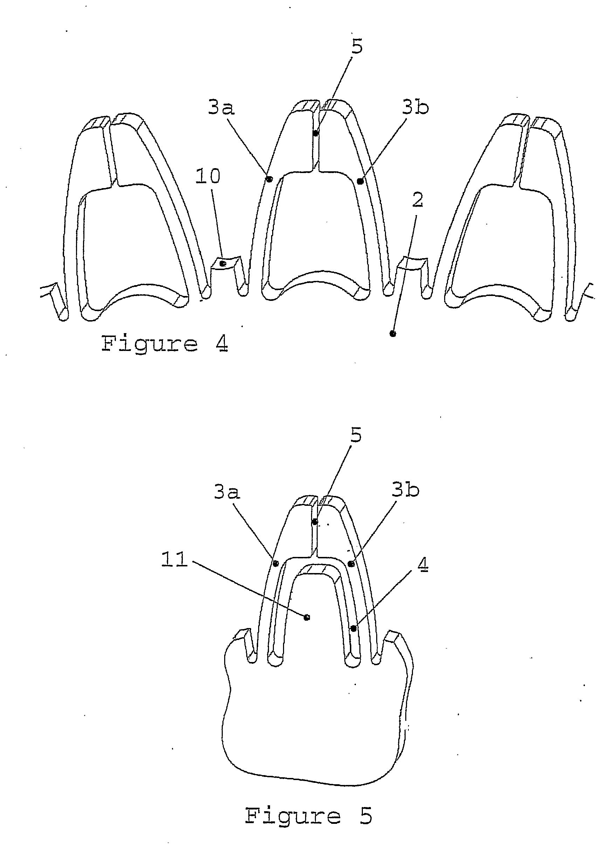

Dans la variante de la figure 4, les parties élastiques de flexion des portions 3a, 3b sont allongées en pénétrant dans le mobile 2, plus profondément que le fond 10 de l'espace inter-dentaire.

La figure 5 se rapporte à une variante dans laquelle une butée supplémentaire 11 de sécurité est ménagée au centre de l'ouverture 4, permettant de limiter la flexion des portions 3a, 3b après que la fente 5 se soit refermée.

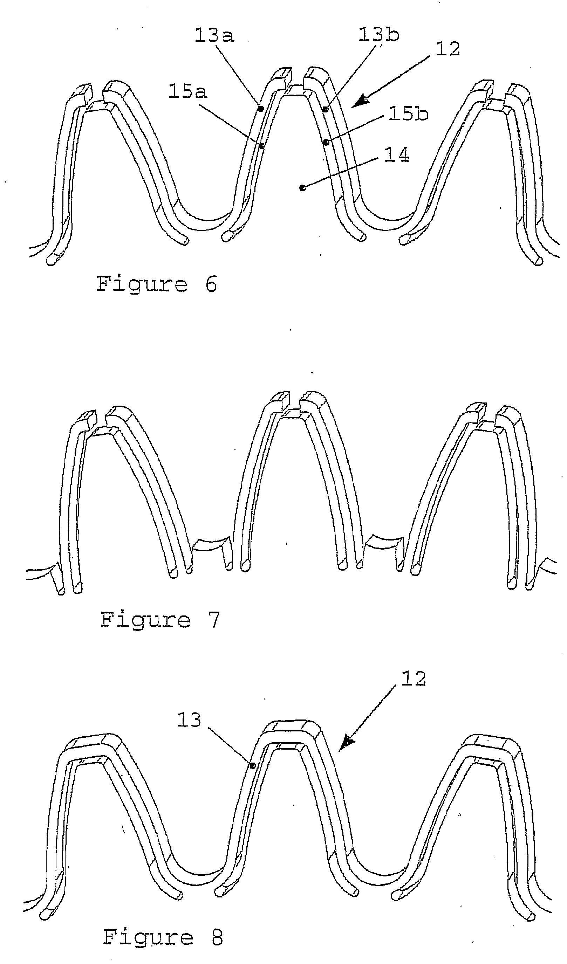

Dans la forme d'exécution de la figure 6, les deux portions de flexion élastiques 13a, 13b sont formées autour d'un noyau de butée central 14 servant de butée pour les portions 13a, 13b par deux fentes 15a, 15b. Dans cette forme d'exécution, les moyens de butée ne se trouvent plus essentiellement sur les portions de flexion élastiques 13a, 13b, mais sont exclusivement formés par le noyau 14, dont la surface est essentiellement parallèle à celle des faces externes des portions de flexion élastiques 13a, 13b au repos, formant la face externe de la dent 12.

La variante de la forme d'exécution de la figure 6 illustrée par la figure 7, constitue le pendant de la variante de la figure 1 illustrée par la figure 4.

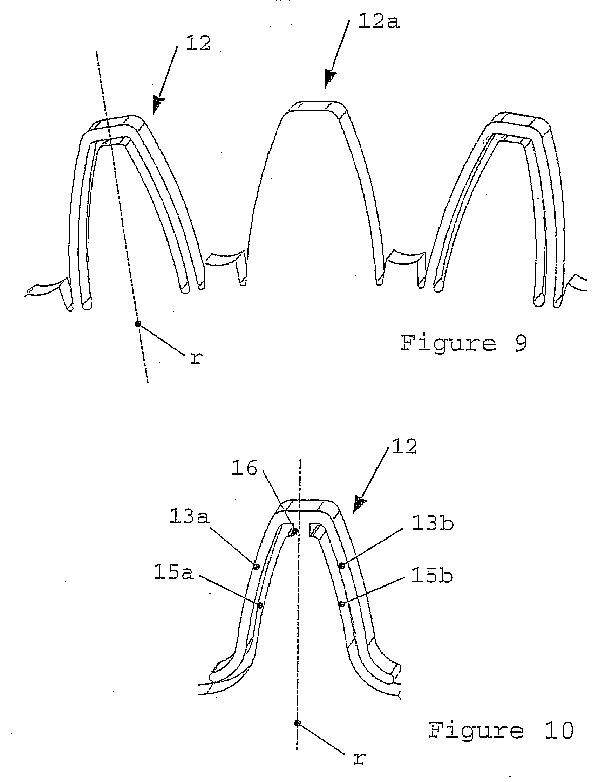

La figure 8 est une variante de la forme d'exécution de la figure 6 dans laquelle les deux portions 13a, 13b sont réunies en une seule portion 13. Dans cette variante, la différence fondamentale vient du fait que toute déformation élastique de la portion 13 intervenant sur un flanc d'une dent 12, provoque une déformation de l'autre flanc. Compte tenu de ce fait, on pourrait envisager d'avoir un mobile denté dont seule une dent sur deux est une dent 12 à rattrapage de jeu, l'autre dent 12a étant une dent pleine, comme illustré par la variante de la figure 9.

La variante de la figure 10 revient au concept d'une dent 12 comportant deux portions 13a, 13b situées symétriquement par rapport au rayon r du mobile 12. Toutefois, dans cette variante, les deux portions 13a, 13b sont rattachées au noyau de butée central 14, par une liaison 16 de part et d'autre de laquelle partent les fentes 15a, 15b. Par contre, les portions de flexion élastiques 13a, 13b sont libres à leurs extrémités adjacentes au fond de la dent 12.

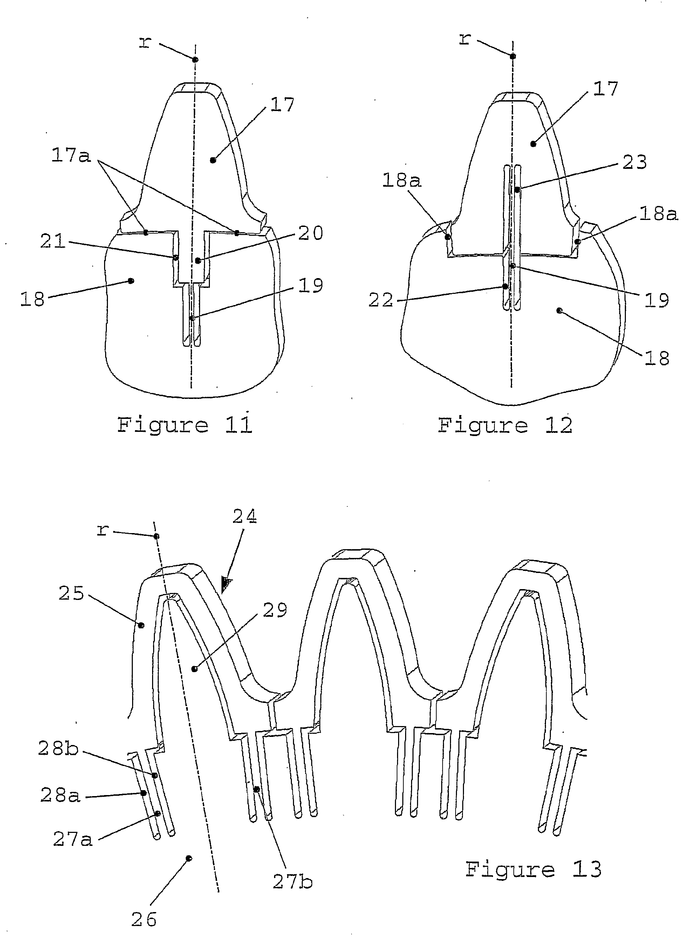

La figure 11 se rapporte à une forme d'exécution dans laquelle la dent 17 est rattachée à la planche du mobile denté 18 par une lame de flexion 19 formée à l'intérieur de la planche du mobile denté 18. Une partie intermédiaire plus épaisse 20 disposée avec jeu dans un logement 21 sert de moyens de butée avec les parois de ce logement 21. La base 17a de la dent 17, de part et d'autre de la partie intermédiaire 20 est parallèle au bord de la planche 18. Le déplacement de cette dent 17 est essentiellement une translation perpendiculaire au rayon r.

La variante illustrée par la figure 12 se distingue essentiellement par le fait que les moyens de butée sont constitués par deux rebords 18a disposés de part et d'autre du pied de la dent 17 à rattrapage de jeu. La lame flexible 19 s'étend ici au centre d'un évidement 22 de la planche de la roue 18 et se prolonge dans un évidement 23 ménagé dans la dent 17 et centré sur le rayon r passant par le sommet de cette dent 17.

La figure 13 se rapporte à une forme d'exécution qui associe le concept de la forme d'exécution de la figure 11 et celui de la figure 9. Les dents 24 comportent une portion externe 25, symétrique au rayon r, reliée à la planche du mobile 26 par deux lames de flexion élastiques 27a, 27b qui s'étendent à l'intérieur de deux évidements 28a, 28b qui ont une orientation radiale dans la planche du mobile 26. Un noyau 29 situé à l'intérieur de la portion externe 25 constitue les moyens de butée qui limitent le déplacement de la portion externe 25.

Dans cette forme d'exécution, comme dans celle des figures 11 et 12, il serait aussi envisageable de réaliser un mobile denté dont seule une dent sur deux est à rattrapage de jeu, les autres dents étant des dents fixes.

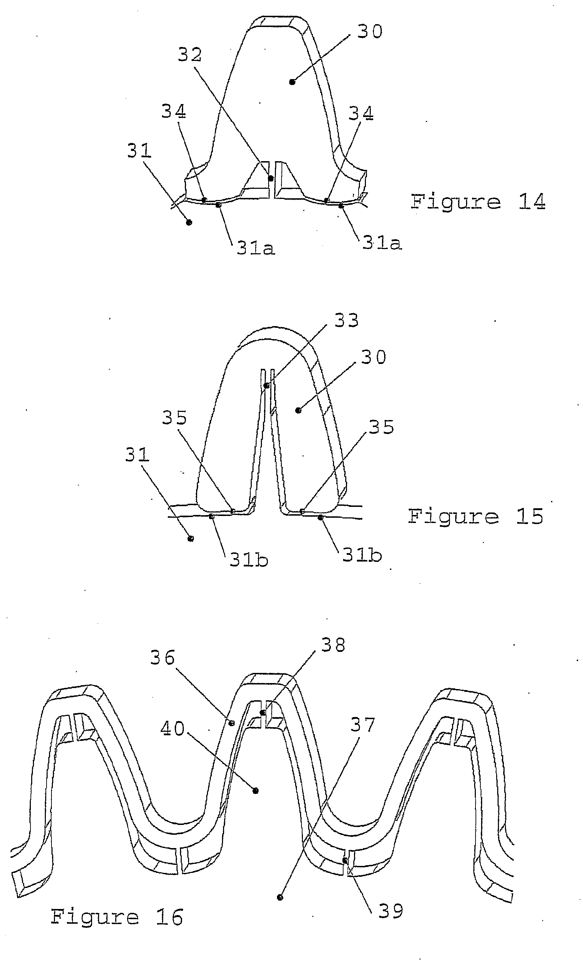

Dans la forme d'exécution des figures 14 et 15, la dent 30 est reliée à la planche du mobile denté 31 par une languette de flexion élastique 32, respectivement 33, qui sont conçues pour permettre un basculement des dents 30 et non plus une translation. Dans cette forme d'exécution, ce sont les bases 34, respectivement 35 des dents 30 qui viennent buter lors du basculement de ces dents 30 contre les surfaces adjacentes homologues 31a, respectivement 31b de la planche des roues respectives 30.

Dans la forme d'exécution illustrée par la figure 16, les portions symétriques de part et d'autre du rayon r passant par les sommets des dents adjacentes se rejoignent et forment ainsi un élément annulaire denté 36 relié à la planche du mobile denté 37 présentant la forme d'une roue dentée, par des languettes radiales 38, 39 qui sont disposées respectivement aux sommets des dents et au fond de chaque dent. Les moyens de butée sont formés par les flancs latéraux des noyaux 40 en forme de dents de la planche 37 du mobile denté.

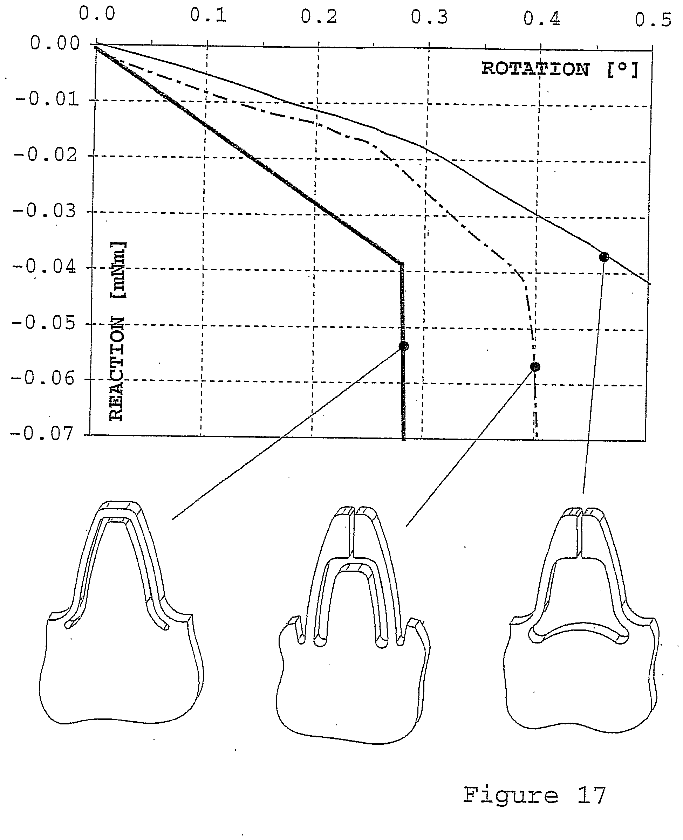

Le diagramme de la figure 17 représente les résultats d'une simulation effectuée à l'aide d'une boule se déplaçant sur une trajectoire circulaire correspondant au cercle primitif de l'engrenage entraîneur. Celle-ci vient en appui contre la portion de dent reliée au mobile de façon élastique. On mesure alors le couple de réaction sur l'axe de rotation du mobile en fonction de l'angle de rotation de celui-ci. On peut constater une augmentation de la rigidité de la denture à partir de ∼0,2° - 0,3° de rotation. On constate que cet effet est très net pour la forme d'exécution dans laquelle les moyens de butée sont formés par un noyau solide, comme dans la forme d'exécution de la figure 9 par exemple.

On peut choisir avec une grande liberté les pentes et angle(s) de changement de pente de la caractéristique couple de réaction en fonction de l'angle de déplacement, par ajustement de la géométrie, de l'épaisseur des zones élastiques, de la dimension des fentes et des espaces ménagés entre les parties élastiques et les parties rigides.

Les engrenages des exécutions représentées aux figures 8, 11 à 16 ne présentent pas de zones extérieures d'accrochage et ainsi sont moins susceptibles de destruction lors de leur manipulation en fabrication ou lors de leur mise en place.

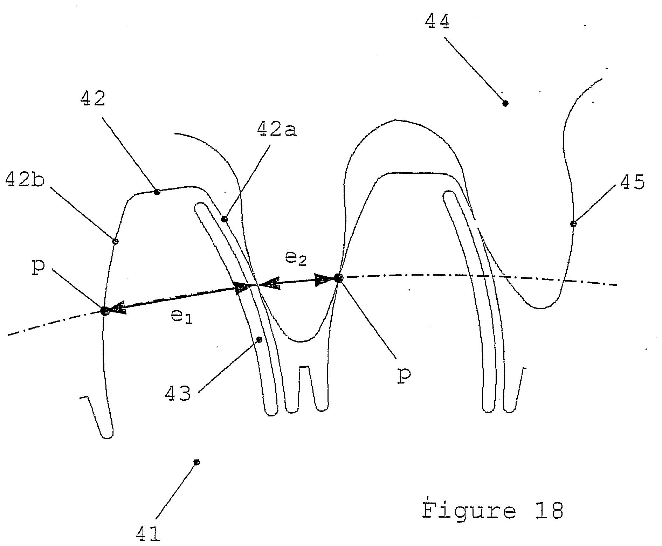

La forme d'exécution illustrée par la figure 18 se rapporte à un engrenage dans lequel un des mobiles partenaires 41 présente des dents 42 dont chacune comporte une fente 43 qui est conformée pour conférer une élasticité sensiblement plus grande à une des faces de contact 42a de ces dents qu'à leur autre face de contact. De ce fait, la face de contact 42a la plus élastique peut fléchir lorsqu'elle entre en contact avec une dent 45 de l'autre mobile partenaire 44. L'autre partie de la dent 42 solidaire de la face de contact 42b moins élastique peut servir de butée à la face de contact 42a plus élastique.

Lorsqu'un tel engrenage est utilisé pour rattraper le jeu entre les mobiles partenaires 41, 44 de l'engrenage, le total des deux épaisseurs linéaires e₁, e₂ des dents 42, 45 de ces mobiles partenaires 41, 44 mesurées sur le diamètre primitif du mobile partenaire 41 à rattrapage de jeu sont au moins égales au pas de ce mobile à rattrapage de jeu.

Le pas de la denture correspond à la longueur d'arc entre le point p d'une dent de cette denture et le point homologue p' d'une dent adjacente de cette même denture.

## Revendications

1. Mobile denté à rattrapage de jeu pour engrenage de précision, notamment d'horlogerie, dans lequel des dents à rattrapage de jeu comportent chacune au moins une portion s'étendant symétriquement de part et d'autre du rayon dudit mobile passant par le sommet desdites dents et qui est reliée de manière élastique audit mobile pour conférer auxdites dents une liberté de mouvement dans le plan de ce mobile, **caractérisé en ce qu'**au moins une dent sur deux est une dent à rattrapage de jeu dont au moins une partie est reliée au mobile denté par au moins une lame élastique et comportant des moyens de butée disposés pour limiter l'amplitude de ladite liberté de mouvement en fonction du jeu d'engrenage à rattraper.

2. Mobile denté selon la revendication 1, dans lequel le profil de chaque dent à rattrapage de jeu est celui de ladite portion s'étendant symétriquement, séparée du reste de ladite dent par une fente traversante (5 ; 15a, 15b), de profil parallèle à celui de ladite dent et dont la largeur correspond sensiblement au jeu à rattraper, ledit reste de ladite dent à rattrapage de jeu formant lesdits moyens de butée.

3. Mobile denté selon la revendication 1, dans lequel ladite portion s'étendant symétriquement de chaque dent (12) à rattrapage de jeu est séparée en deux par une fente centrée sur le sommet de ladite dent à rattrapage de jeu.

4. Mobile denté selon la revendication 1, dans lequel chaque dent à rattrapage de jeu comporte un dégagement central radial (23), s'étendant sur toute son épaisseur et débouchant latéralement et symétriquement audit dégagement à la base de cette dent (17) qui est reliée audit mobile par une lame de flexion radiale (19) dont les extrémités respectives sont reliées audit mobile (18) et au fond dudit dégagement central radial et dont la longueur est supérieure à celle dudit dégagement (23), pour donner à ladite dent (17) à rattrapage de jeu un degré de basculement fonction dudit jeu à rattraper.

5. Mobile denté selon la revendication 1, dans lequel le profil de chacune desdites dents à rattrapage de jeu (24) est solidaire de deux portions symétriques (25) situées de part et d'autre du rayon r passant par le sommet de ladite dent, chacune desdites portions (25) étant reliée audit mobile (26) par une lame élastique (27a, 27b) parallèle audit rayon r.

6. Mobile denté selon la revendication 1, dans lequel le profil de chacune desdites dents (1) à rattrapage de jeu est solidaire de deux portions symétriques (3a, 3b) situées de part et d'autre du rayon r passant par le sommet de ladite dent (1), la partie de chacune desdites portions adjacente à l'extrémité de ladite dent présentant une surface de butée (6,7) parallèle au rayon r passant par le centre de ladite dent, tandis que la partie de chacune desdites portions adjacente à la base de la dent (1) comporte une partie élastique de flexion pour relier chacune desdites portions audit mobile (2).

7. Mobile selon la revendication 6, dans lequel lesdites surfaces de butées (6,7) sont conformées pour s'opposer au glissement radial lorsqu'elles sont mises en contact l'une avec l'autre.

8. Mobile denté selon la revendication 1, **caractérisé en ce qu'**il comprend au moins une dent à rattrapage de jeu (24) comportant une portion externe (25) reliée à la planche du mobile (26) par deux lames de flexion élastiques (27a, 27b) qui s'étendent à l'intérieur de deux évidements (28a, 28b) qui ont une orientation radiale dans la planche du mobile (26).

9. Engrenage pour mécanisme de précision, **caractérisé en ce qu'**il comprend un mobile denté selon l'une des revendications précédentes.

10. Engrenage pour mécanisme de précision selon la revendication précédente, **caractérisé en ce que** les dents (42) de l'un (41) des mobiles partenaires dudit engrenage présentent chacune une fente (43) conformée pour conférer une élasticité sensiblement plus grande à une des faces de contact (42a) de ces dents qu'à leur autre face de contact.

11. Engrenage pour mécanisme de précision selon la revendication 9 ou 10, **caractérisé en ce que** le total des deux épaisseurs e1, e2 des dents desdits mobiles partenaires mesurées sur le diamètre primitif du mobile partenaire à rattrapage de jeu sont au moins égales au pas de ce mobile à rattrapage de jeu, de sorte que le mobile partenaire dont les dents présentent chacune une fente sert à rattraper le jeu entre les mobiles partenaires dudit engrenage.

12. Montre-bracelet, **caractérisée en ce qu'**elle comprend un mobile denté selon l'une des revendications 1 à 8.

## Patentansprüche

1. Gezahntes Drehteil zur Nachstellung des Spiels eines Präzisionsgetriebes, insbesondere einer Uhr, bei dem Zähne für die Nachstellung jeweils mindestens einen Abschnitt aufweisen, der sich symmetrisch beiderseits des Radius des Drehteils erstreckt, der durch die Spitze der genannten Zähne verläuft, und der mit dem Drehteil elastisch verbunden ist, um den Zähnen eine Bewegungsfreiheit in der Ebene dieses Drehteils zu verleihen, **dadurch gekennzeichnet, dass** mindestens jeder zweite Zahn ein Nachstellungszahn ist, dessen mindestens einer Teil mit dem gezahnten Drehteil durch mindestens ein elastisches Blatt verbunden ist und Anschlagmittel aufweist, die angeordnet sind, um die Amplitude der genannten Bewegungsfreiheit in Abhängigkeit von dem nachzustellenden Zahnungsspiel zu begrenzen.

2. Gezahntes Drehteil nach Anspruch 1, wobei das Profil jedes Nachstellungszahns das desjenigen Abschnitts ist, der sich symmetrisch erstreckt, getrennt vom Rest des Zahns durch einen durchgängigen Schlitz (5; 15a, 15b), mit einem Profil, das parallel zu dem des genannten Zahns ist und dessen Breite im Wesentlichen dem nachzustellenden Spiel entspricht, wobei der genannte Rest des Nachstellungszahns die genannten Anschlagmittel bildet.

3. Gezahntes Drehteil nach Anspruch 1, wobei der Abschnitt, der sich symmetrisch von jedem Nachstellungszahn (12) erstreckt, durch einen auf der Spitze des Nachstellungszahns zentrierten Schlitz zweigeteilt ist.

4. Gezahntes Drehteil nach Anspruch 1, wobei jeder Nachstellungszahn eine zentrale radiale Aussparung (23) aufweist, die sich über seine gesamte Dicke erstreckt und seitlich und symmetrisch zu der Aussparung an der Basis dieses Zahns (17) ausmündet, der mit dem Drehteil durch ein Blatt mit radialer Biegung (19) verbunden ist, dessen jeweilige Enden mit dem Drehteil (18) und mit dem Boden der genannten radialen zentralen Aussparung verbunden sind und dessen Länge größer als die der genannten Aussparung (23) ist, um dem Nachstellungszahn (17) einen Wippgrad zu verleihen, der von dem genannten nachzustellenden Spiel abhängt.

5. Gezahntes Drehteil nach Anspruch 1, wobei das Profil jedes der genannten Nachstellungszähne (24) mit zwei symmetrischen Abschnitten (25) fest verbunden ist, die sich beiderseits des Radius r befinden, der durch die Spitze des genannten Zahns verläuft, wobei jeder der genannten Abschnitte (25) mit dem genannten Drehteil (26) durch ein elastisches Blatt (27a, 27b) verbunden ist, welches parallel zum Radius r ausgerichtet ist.

6. Gezahntes Drehteil nach Anspruch 1, wobei das Profil jedes der genannten Nachstellungszähne (1) mit zwei symmetrischen Abschnitten (3a, 3b) fest verbunden ist, die sich beiderseits des Radius r befinden, der durch die Spitze des genannten Zahns (1) verläuft, wobei der Teil von jedem der Abschnitte, welcher dem Ende des genannten Zahns benachbart ist, eine Anschlagfläche (6, 7) aufweist, die parallel zu dem Radius r ausgerichtet ist, der durch das Zentrum des genannten Zahns verläuft, wohingegen der Teil von jedem der Abschnitte, welcher der Basis des Zahns (1) benachbart ist, einen elastischen Biegeteil aufweist, um jeden der genannten Abschnitte mit dem Drehteil (2) zu verbinden.

7. Drehteil nach Anspruch 6, wobei die Anschlagflächen (6, 7) ausgebildet sind, um dem radialen Abgleiten entgegenzuwirken, wenn sie miteinander in Kontakt gebracht sind.

8. Gezahntes Drehteil nach Anspruch 1, **dadurch gekennzeichnet, dass** er mindestens einen Nachstellungszahn (24) umfasst, der einen äußeren Abschnitt (25) aufweist, der mit der Platte des Drehteils (26) durch zwei elastische Biegeblätter (27a, 27b) verbunden ist, die sich im Inneren von zwei Aushöhlungen (28a, 28b) erstrecken, die eine radiale Ausrichtung in der Platte des Drehteils (26) haben.

9. Getriebe für Präzisionsmechanismus, **dadurch gekennzeichnet, dass** es ein gezahntes Drehteil nach einem der vorangehenden Ansprüche umfasst.

10. Getriebe für Präzisionsmechanismus nach dem vorangehendem Anspruch, **dadurch gekennzeichnet, dass** die Zähne (42) eines (41) der Partnerdrehteile des genannten Getriebes jeweils einen Schlitz (43) aufweisen, der ausgebildet ist, um einer der Kontaktflächen (42a) dieser Zähne eine spürbar größere Elastizität als ihrer anderen Kontaktfläche zu verleihen.

11. Getriebe für Präzisionsmechanismus nach Anspruch 9 oder 10, **dadurch gekennzeichnet, dass** die Gesamtsumme der zwei Dicken e1, e2 der Zähne der genannten Partnerdrehteile, gemessen auf dem Teilkreisdurchmesser des Partnerdrehteils zur Nachstellung des Spiels, mindestens gleich der Teilung dieses Drehteils zur Nachstellung des Spiels sind, so dass das Partnerdrehteil, dessen Zähne jeweils einen Schlitz aufweisen, zur Nachstellung des Spiels zwischen den Partnerdrehteilen des Getriebes dient.

12. Armbanduhr, **dadurch gekennzeichnet, dass** sie ein gezahntes Drehteil nach einem der Ansprüche 1 bis 8 umfasst.

## Claims

1. A backlash-compensating toothed moving part for a precision gear assembly, particularly of a timepiece, in which backlash-compensating teeth each have at least one portion which extends symmetrically on either side of the radius of said moving part passing through the tip of said teeth and which is connected elastically to said moving part so as to provide said teeth with a freedom of movement in the plane of this moving part, **characterized in that** at least one tooth in two is a backlash-compensating tooth, at least a part of said tooth being connected to said toothed moving part by at least one bending web, and **in that** these backlash-compensating teeth have stop means arranged so as to limit the amplitude of said freedom of movement as a function of the engagement backlash to be compensated for.

2. The toothed moving part as claimed in claim 1, in which the profile of each backlash-compensating tooth is that of said symmetrically extending portion separated from the remainder of said tooth by a through slot (5; 15a, 15b) whose profile is parallel to that of said tooth and of which the width corresponds substantially to the backlash to be compensated for, said remainder of said backlash-compensating tooth forming said stop means.

3. The toothed moving part as claimed in claim 1, in which said symmetrically extending portion of each backlash-compensating tooth (12) is separated into two by a slot centered on the tip of said backlash-compensating tooth.

4. The toothed moving part as claimed in claim 1, in which each backlash-compensating tooth has a radial central cutout (23) extending over its full thickness and opening laterally and symmetrically with respect to said cutout at the base of this tooth (17), which is connected to said moving part by a radial bending web (19) whose respective ends are connected to said moving part (18) and to the bottom of said radial central cutout and whose length is greater than that of said cutout (23), so as to give said backlash-compensating tooth (17) a degree of tilting dependent on said backlash to be compensated for.

5. The toothed moving part as claimed in claim 1, in which the profile of each of said backlash-compensating tooth (24) is integral with two symmetrical portions (25) situated on either side of the radius r passing through the tip of said tooth, each of said portions (25) being connected to said moving part (26) by an elastic web (27a, 27b) parallel to said radius r.

6. The toothed moving part as claimed in claim 1, in which the profile of each of said backlash-compensating teeth (1) is integral with two symmetrical portions (3a, 3b) situated on either side of the radius r passing through the tip of said tooth (1), the section of each of said portions which is adjacent to the end of said tooth having a stop surface (6, 7) parallel to the radius r passing through the center of said tooth, while the section of each of said portions which is adjacent to the base of the tooth (1) has an elastic bending section in order to connect each of said portions to said moving part (2).

7. The moving part as claimed in claim 6, in which said stop surfaces (6, 7) are shaped so as to oppose radial sliding when they are brought into contact with one another.

8. The toothed moving part as claimed in claim 1, **characterized in that** it comprises at least one backlash-compensating tooth (24) comprising an external portion (25), connected to the plate of the moving part (26) by two elastic bending webs (27a, 27b) which extend inside two cutouts (28a, 28b) which have a radial orientation in the plate of the moving part (26).

9. A gear assembly for a precision mechanism, **characterized in that** it comprises a toothed moving part as claimed in one of previous claims.

10. A gear assembly for a precision mechanism as claimed in the preceding claim, **characterized in that** the teeth (42) of one (41) of the mating moving parts of said gear assembly each have a slot (43) shaped so as to impart a substantially higher degree of elasticity to one of the contact faces (42a) of these teeth than to their other contact face.

11. A gear assembly for a precision mechanism as claimed in claim 9 or 10, **characterized in that** the sum of the two thicknesses e₁, e₂ of the teeth of said mating moving parts measured along the pitch diameter of said backlash-compensating mating moving part is at least equal to the pitch of this backlash-compensating moving part, so that said mating moving part whose teeth each have a slot serves to compensate for the backlash between the mating moving parts of said gear assembly.

12. wristwatch, **characterized in that** it comprises a toothed moving part as claimed in one of claims 1 to 8.
